Europäisches Patentamt

European Patent Office

Office européen des brevets

(11) Veröffentlichungsnummer: **0 293 663**

**A2**

(12) **EUROPÄISCHE PATENTANMELDUNG**

(21) Anmeldenummer: **88107875.2**

(22) Anmeldetag: **17.05.88**

(51) Int. Cl.⁴: **G01N 27/02**

(30) Priorität: **05.06.87 DE 3718958**

(43) Veröffentlichungstag der Anmeldung:
**07.12.88 Patentblatt 88/49**

(84) Benannte Vertragsstaaten:
**AT BE CH DE FR GB IT LI LU NL SE**

(71) Anmelder: **Siemens Aktiengesellschaft Berlin
und München**
**Wittelsbacherplatz 2**
**D-8000 München 2(DE)**

(72) Erfinder: **Lehmann, Volker**
**Neumarkter Strasse 82a**
**D-8000 München 80(DE)**
Erfinder: **Föll, Helmut, Dr.**
**Wemdinger Strasse 40**
**D-8000 München 80(DE)**

(54) **Anordnung und Verfahren zur Bestimmung von in wässrigen Flüssigkeiten enthaltener Flusssäure.**

(57) Die Erfindung betrifft eine Anordnung und ein Verfahren zur wiederholbaren qualitativen und quantitativen Bestimmung von in wäßrigen Flüssigkeiten enthaltener Flußsäure. Die Anordnung enthält eine Gleichspannungsquelle (3), deren positiver Pol mit einer aus Silizium bestehenden Elektrode (1) und deren negativer Pol mit einer Gegenelektrode (2) verbunden ist und einer in den Stromkreis eingebrachten Stromanzeigevorrichtung. Sie kann in ein stabförmiges Gehäuse eingebaut sein, das als Gleichspannungsquelle (3) Batterien und als Stromanzeigevorrichtung eine Leuchtdiode (4) oder ein stromabhängiges Meßinstrument enthält. Das Verfahren sieht vor, die Elektroden in die zu bestimmende Flüssigkeit einzubringen und den Stromfluß zu detektieren oder zu messen. Die Flußsäurekonzentration in der Flüssigkeit kann bestimmt werden, wenn als elektrische Stromanzeigevorrichtung ein entsprechend dem Konzentrationsbereich geeichtes Ampermeter verwendet wird.

FIG 2

## Anordnung und Verfahren zur Bestimmung von in wäßrigen Flüssigkeiten enthaltender Flußsäure

Die Erfindung betrifft eine Anordnung und ein Verfahren zur wiederholbaren qualitativen und quantitativen Bestimmung von in wäßrigen Flüssigkeiten vorhandener Flußsäure.

Flußsäure ist bekanntermaßen eine der wichtigsten Chemikalien in der Mikroelektronik. Dabei ist deren Eigenschaft Siliziumoxid zu lösen von besonderer Bedeutung. Zum Beispiel erfolgen naßchemische Ätzprozesse von Siliziumhalbleitermaterialien meist in fluorwasserstoffhaltigen Lösungen. Da Flußsäure für den Menschen stark ätzend und selbst in geringer Konzentration noch toxisch ist, wird sie in der Verordnung über Gefahrenstoffe GefStoffV IV 2.2.6 geführt. Ein handliches schnelles Bestimmungsverfahren für in wäßrigen Flüssigkeiten enthaltene Flußsäure ist für den gewerblich industriellen Anwendungsbereich und für den Einsatz auf dem Gebiet des Arbeitsschutzes bisher nicht bekannt. Mit den bekannten Schnelltestverfahren für Säuren läßt sich zwar der saure Charakter einer wäßrigen Flüssigkeit bestimmen, z.B. mit Lackmuspapier, Flußsäuregehalte lassen sich aber damit nicht bestimmen.

Aufgabe der Erfindung ist, eine Anordnung und ein Verfahren anzugeben, mit denen in wäßrigen Flüssigkeiten enthaltene Flußsäure einfach und - schnell qualitativ und quantitiv bestimmt werden kann.

Die erfindungsgemäße Lösung der Aufgabe erfolgt laut Patentanspruch 1 und 14. Weitere Ausgestaltungen der Erfindung gehen aus den Unteransprüchen hervor.

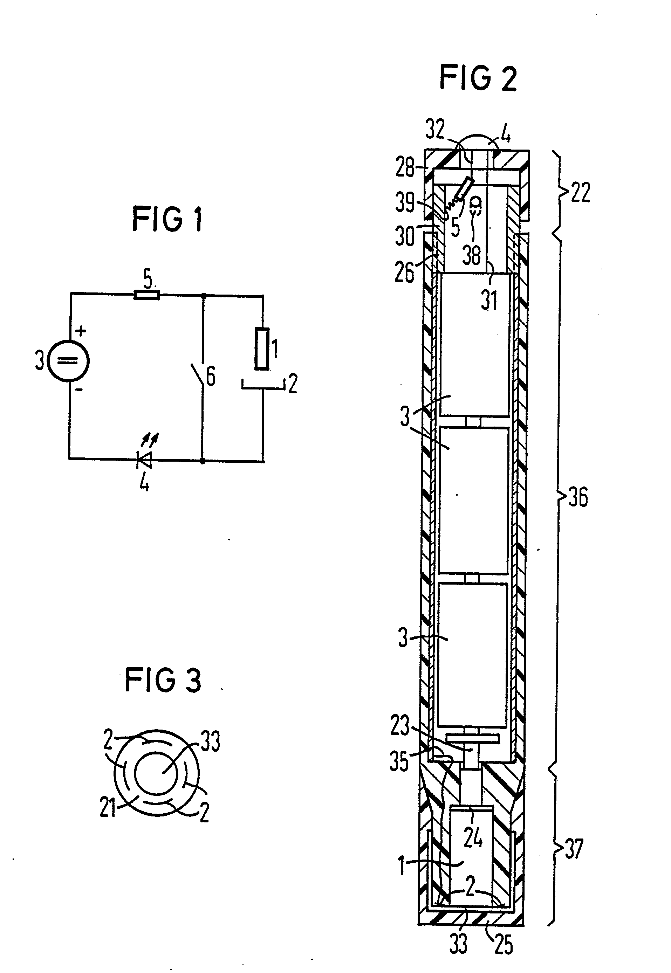

Im weiteren wird die Erfindung anhand eines Ausführungsbeispiels mit den Figuren 1 bis 4 erläutert.

Dabei zeigt Fig. 1 das Schaltbild einer in Fig. 2 schematisch dargestellten Anordnung, mit der in wäßrigen Flüssigkeiten enthaltene Flußsäure wiederholbar qualitativ und quantitativ bestimmt werden kann.

Fig. 3 zeigt in Draufsicht die Unterseite des Gehäuses mit den Elektroden nach Fig. 2.

Fig. 4 zeigt Kennlinien einer Messung mit Flußsäureeichlösungen der Konzentrationen 1%, 2,5%, 5%, 10%, 20% und 50%.

FIG. 1: Eine Siliziumelektrode 1 aus p-dotiertem Silizium ist über einen Widerstand 5 mit dem positiven Pol einer Gleichspannungsquelle 3 elektrisch verbunden. Eine Gegenelektrode 3 aus Platin ist über eine in Stromflußrichtung geschaltete Leuchtdiode 4 mit dem negativen Pol der Gleichspannungsquelle 3 elektrisch verbunden. Die Gegenelektrode 3 muß aus einem inerten Material bestehen. Sie kann z. B. auch aus Kohlenstoff bestehen. Ein Schalter 6 überbrückt im geschlossenen Zustand den Stromkreis über die Elektroden. Bei geschlossenem Schalter 6 zeigt die Leuchtelektrode 4 den Stromfluß über den Widerstand 5 an.

Das Verfahren zur Bestimmung von Flußsäure in wäßrigen Flüssigkeiten beruht auf der Eigenschaft der Flußsäure als einzige Chemikalie Siliziumoxid zu lösen. Bei der beschriebenen Beschaltung der Siliziumelektrode 1 bildet sich aufgrund der anodischen Oxydation der Siliziumelektrode 1 in wäßrigen Flüssigkeiten Siliziumoxid, das den Stromfluß in nicht flußsäurehaltigen Flüssigkeiten verhindert, so daß die Leuchtdiode 4 keine Anzeige macht. Eine Anzeige erfolgt nur bei Anwesenheit von Flußsäure. Die Messung erfolgt bei geöffnetem Schalter 6, nachdem die beiden Elektroden zusammen in die zu bestimmende Flüssigkeit gebracht worden sind. Bei Verwendung von nicht p-dotiertem Silizium als Siliziumelektrode müssen die notwendigen Minoritätsladungsträger gleichzeitig erzeugt werden, z.B. durch Bestrahlung mit Licht.

FIG. 2 und 3: Die Anordnung ist in ein zylindrisches stabförmiges Gehäuse eingebaut. Das Gehäuse läßt sich durch Entfernen des oberen Gehäuseteils 22 öffnen. Der untere Gehäuseteil 37 und der mittlere Gehäuseteil 36 sind aus einem Stück Teflon gearbeitet. Auf den unteren Gehäuseteil 37 ist eine Schutzkappe 25 aus Teflon aufgesteckt, die während des Meßbetriebes abgenommen wird. Im mittleren Gehäuseteil 36 befindet sich die Gleichspannungsquelle 3, die eine Spannung von 4,5 Volt bereitstellt. Sie besteht aus drei hintereinander geschalteten 1,5 Volt-Batterien, die ins Gehäuse eingelegt sind. Der positive Pol der unteren Batterie berührt den metallischen Druckfederstift 23. Auf dem unteren Ende des Druckfederstiftes 23 befindet sich eine Indium-Gallium-Schicht 24, die einen ohmschen Kontakt zur Siliziumelektrode 1 herstellt.

Die Siliziumelektrode 1 und die Gegenelektrode 2 sind im unteren Gehäuseteil 37 so fest in das Teflon eingepreßt, daß beim Eintauchen der Elektroden in die Flüssigkeit keine Flüssigkeit ins Gehäuse eindringen kann. Dabei bilden die Elektroden mit dem Teflon auf der Gehäuseunterseite eine nahezu ebene Fläche. Die Siliziumelektrode 1 hat eine frei liegende Oberfläche 33 mit ca. 20 mm² und eine p-Dotierung von ca. N = 0,1 - 1 Ohm cm. Die Gegenelektrode 2 besteht aus einem Platindraht, der die freiliegende Siliziumoberfläche 33 umgibt. Die Gegenelektrode 2 ist durch das Teflon hindurch ins Innere des Gehäuses geführt und bildet dort einen elektrischen Kontakt mit der metallischen Innenwand 34. Der Schalter 6 wird gebildet aus dem metallischen Druckfederstift 23 und einem Gegenkontakt 35, der das Ende des Platindrahtes der Gegenelektrode 2 bildet. Im heruntergedrückten Zustand des Druckfederstifts 23 ist der Stromkreis über die Elektroden kurzgeschlossen.

Der obere Gehäuseteil 22 besteht aus einem hohlzylinderförmigen Innenteil 30 aus Metall und einem hohlzylinderförmigen Außenteil 23 aus elektrisch nicht leitendem Material. Das Innenteil 30 besitzt ein Gewinde 26, mit dem es mit der metallischen Innenwand 34 des mittleren Gehäuseteils 36 verschraubt und damit elektrisch verbunden ist. Das Außenteil 28 reicht nicht an das mittlere Gehäuseteil 36 heran und ist mit dem Innenteil 30 an der Stelle 38 beweglich verbunden, so daß das Außenteil 23 in Richtung des mittleren Gehäuseteils 36 heruntergedrückt werden kann.

Auf der Oberseite des oberen Gehäuseteils 22 ist die Leuchtdiode 32 befestigt. Sie bildet mit ihrem ersten Anschlußdraht 31 durch das Innere des oberen Gehäuseteils 22 hindurch einen elektrischen Kontakt mit dem negativen Pol der obersten Batterie. Der Widerstand 5 ist im oberen Gehäuseteil 22 angeordnet und zwischen den zweiten Leuchtdiodenanschlußdraht 33 und dem Innenteil 30 in Reihe geschaltet. Die elektrische Verbindung des Widerstands 5 im Innenteil 30 ist dabei durch einen Schleifkontakt 3 hergestellt. Der obere Gehäuseteil 22 erfüllt die Funktion eines Schaltknopfes. Das Außenteil 28 kann heruntergedrückt werden, wobei der erste Leuchtdiodenanschlußdraht 31 die Batterien auf den Druckfederstift 23 herunterdrückt und diesen mit dem Gegenkontakt 35 kurzschließt. Dabei verschiebt sich der Schleifkontakt 3 nach unten. Anstelle eines Schleifkontakts 3 könnte auch ein weiterer Druckfederstift einge setzt sein. Der erste Leuchtdiodenanschlußdraht 31 kann zur besseren Stabilität, z.B. mit Lötzinn, umschmolzen sein.

Ein Vorteil der beschriebenen Anordnung ist, daß wegen der Elektrodenanordnung in einer ebenen Fläche (Fig.3) schon geringe Flüssigkeitsmengen für eine Messung ausreichen, z.B. sind schon Tropfen einer verschütteten Flüssigkeit ausreichend. Die Verwendung von Batterien läßt die Anordnung unabhängig vom Netz werden, so daß sie schnell überall eingesetzt werden können. Das handliche Format des Gehäuses ist dabei ebenfalls von Vorteil.

Beim Einsatz einer Leuchtdiode 4 als elektrische Stromanzeigevorrichtung läßt sich an der Helligkeit des Leuchtdiodenlichts schon eine Abschätzung der Flußsäurekonzentration in der gemessenen Flüssigkeit vornehmen. Bei der beschriebenen Anordnung wird dabei der Unterschied der Helligkeit der Leuchtdiodenanzeige während der Messung im Vergleich zur Helligkeit bei geschlossenem Schalter 6 abgeschätzt. Sehr geringe Helligkeitsunterschiede deuten auf eine Flußsäurekonzentration von 10 bis 50% hin und deutliche Helligkeitsunterschiede auf eine Flußsäurekonzentration von 1 bis 10%. Ein leichtes Glimmen der Leuchtdiode 4 zeugt von einer Flußsäurekonzentration von weniger als 1%.

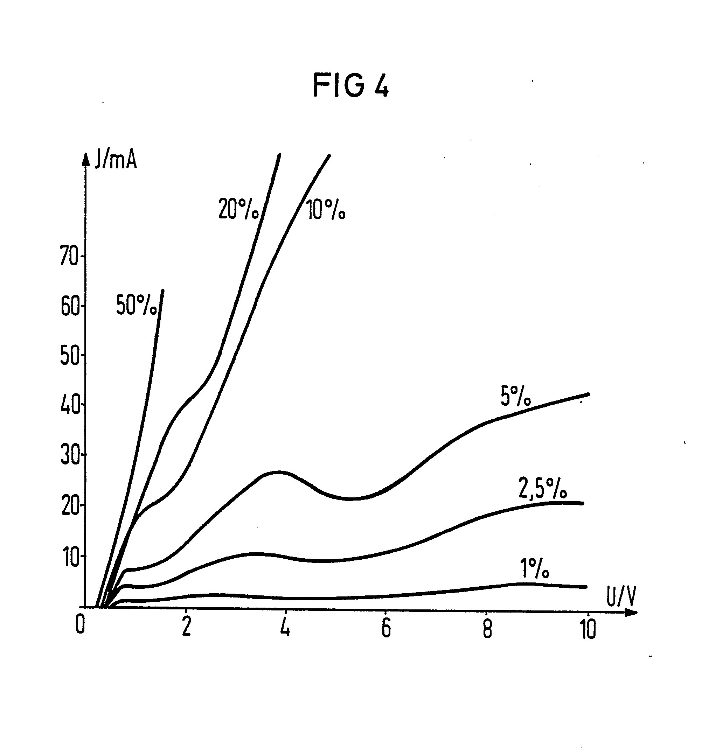

FIG. 4: Wenn die Anordnung anstelle der Leuchtdiode 4 mit einem Amperemeter verbunden wird, lassen sich genaue Konzentrationsmessungen der Flußsäure in der Flüssigkeit vornehmen. Bei den Kennlinien wurde der Strom in Milliampere und die Spannung in Volt gemessen. Nach dem Aufnehmen von Eichgeraden läßt sich die Flußsäurekonzentration sehr genau bestimmen. Von besonderer Bedeutung ist dabei, daß Flußsäurekonzentrationen bis zu einem Bereich von 0,1% nachgewiesen werden können, wobei der Grenzwert für Flußsäure in der GefStoffV IV-2.2.6 0,5% beträgt.

## Ansprüche

1. Anordnung zur wiederholbaren qualitativen und quantitativen Bestimmung von in wäßrigen Flüssigkeiten vorhandener Flußsäure, **gekennzeichnet** durch

a) eine Gleichspannungsquelle (3), deren positiver Pol mit einer aus Silizium bestehenden Elektrode (1) und deren negativer Pol mit einer Gegenelektrode (2) verbunden ist und

b) eine in den, mit den Polen der Gleichspannungsquelle (3) und der zu untersuchenden Flüssigkeit gebildeten Stromkreis eingebrachten Stromanzeigevorrichtung (4).

2. Anordnung nach Anspruch 1, dadurch **gekennzeichnet**, daß die Siliziumelektrode (1) eine p-Dotierung aufweist.

3. Anordnung nach Anspruch 1 oder 2, dadurch **gekennzeichnet**, daß die Gegenelektrode (2) aus Platin besteht.

4. Anordnung nach Anspruch 1 oder 2, dadurch **gekennzeichnet**, daß die Gegenelektrode (2) aus Kohlenstoff besteht.

5. Anordnung nach einem der Ansprüche 1 bis 4, dadurch **gekennzeichnet**, daß die Siliziumelektrode (1) über einen ohmschen Kontakt an den Stromkreis angeschlossen ist, insbesondere über eine eutektische Gallium-Indium-Schicht (24).

6. Anordnung nach einem der Ansprüche 1 bis 5, dadurch **gekennzeichnet**, daß die elektrische Stromanzeigevorrichtung (4) eine Leuchtdiode ist.

7. Anordnung nach einem der Ansprüche 1 bis 5, dadurch **gekennzeichnet**, daß die elektrische Stromanzeigevorrichtung (4) ein Amperemeter ist.

8. Anordnung nach einem der Ansprüche 1 bis 7, dadurch **gekennzeichnet**, daß ein elektrischer Widerstand (5) im Stromkreis vorgesehen ist, der so dimensioniert ist, daß er die Spannung an der elektrischen Stromanzeigevorrichtung (4) begrenzt.

9. Anordnung nach einem der Ansprüche 1 bis 8, dadurch **gekennzeichnet**, daß ein Schalter (6) im Stromkreis vorgesehen ist, der im geschlossenen Zustand den Stromkreis über die Elektroden kurzschließt.

10. Anordnung nach einem der Ansprüche 1 bis , dadurch **gekennzeichnet**, daß sie in ein stabförmig ausgebildetes Gehäuse eingebaut ist, welches einen zum Öffnen des Gehäuses abnehmbaren oberen Teil (22) besitzt und welche

a) zumindest im unteren Teil, der die Siliziumelektrode (1) mit der sie umgebenden Gegenelektrode (2) enthält, aus Teflon besteht,

b) im Mittelteil Batterien als Gleichspannungsquelle (3) angeordnet enthält und

c) im oberen Teil die für die Anzeige dienende Leuchtdiode (4) oder in durch Eichen auf einen bestimmten Konzentrationsbereich eingestelltes, stromabhängiges Meßinstrument enthält.

11. Anordnung nach Anspruch 10, dadurch **gekennzeichnet**, daß die Elektroden auf der Unterseite des Gehäuses in das Teflon mittig und so fest eingepreßt sind, daß keine Flüssigkeit ins Gehäuse eindringen kann und daß sie mit dem Teflon eine ebene Fläche bilden.

12. Anordnung nach einem der Ansprüche 10 bis 11, dadurch **gekennzeichnet**, daß der obere Teil (22) des Gehäuses aus zwei hohlen, konzentrisch ineinander liegenden und beweglich miteinander verbundenen Teilen besteht, wobei

a) der innere Teil (30) fest mit dem Mittelteil des Gehäues verschraubbar und elektrisch leitend ist,

b) der äußere Teil (28) mit der Stromanzeigevorrichtung so mit den elektrischen Bauelementen verbunden ist, daß er als Schaltknopf für den Schalter dient.

13. Anordnung nach einem der Ansprüche 10 bis 12, dadurch **gekennzeichnet**, daß der Schalter (6) aus einem Druckfederstift (23), der mit einer der Batterien (3) und der Siliziumelektrode (1) verbunden ist und einem Gegenkontakt (35) besteht, der zwischen der Gegenelektrode und der elektrischen Stromanzeigevorrichtung vorgesehen ist.

14. Anordnung nach einem der Ansprüche 10 bis 13, dadurch **gekennzeichnet**, daß der untere Gehäuseteil mit einer abnehmbaren Schutzkappe (25) bedeckt ist.

15. Verfahren zur Detektion von Flußsäure in wäßrigen Flüssigkeiten, dadurch **gekennzeichnet**, daß ein mit dem positiven Pol einer Gleichspannungsquelle (3) verbundenes Siliziumstück (1) als Elektrode und einer mit dem negativen Pol der Gleichspannungsquelle verbundene Gegenelektrode (2) in die Flüssigkeit gebracht werden und mittels einer in den Stromkreis eingebrachten elektrischen Stromanzeigevorrichtung (4) der Stromfluß gemessen wird.

16. Verfahren nach Anspruch 15, dadurch **gekennzeichnet**, daß ein p-dotiertes Siliziumstück (1) verwendet wird.

17. Verfahren nach Anspruch 15 oder 16, dadurch **gekennzeichnet**, daß als Gegenelektrode (2) eine Platinelektrode verwendet wird.

18. Verfahren nach einem der Ansprüche 15 bis 17, dadurch **gekennzeichnet**, daß die Flußsäurekonzentration dadurch bestimmt wird, daß als elektrische Stromanzeigevorrichtung ein entsprechend dem Konzentrationsbereich geeichtes Amperemeter verwendet wird.

# FIG 1

# FIG 2

# FIG 3

# FIG 4